# EUROPEAN PATENT APPLICATION

(11) **EP 3 321 775 A1**
(43) Date of publication of application: **16.05.2018**
(21) Application number: 16821142.3
(22) Date of filing: 03.06.2016
(51) Int. Cl.: G06F 3/01

(54) **TACTILE SENSATION REPRODUCTION DEVICE**

(30) Priority: 08.07.2015 JP 2015137055
(71) Applicant: Alps Electric Co., Ltd., Tokyo 145-8501 (JP)
(72) Inventor: SATO, Wataru, Tokyo 145-8501 (JP); HAGIWARA, Yasuji, Tokyo 145-8501 (JP); KAWANA, Yuzuru, Tokyo 145-8501 (JP); WAKANA, Keigo, Tokyo 145-8501 (JP)
(74) Representative: Schmitt-Nilson Schraud Waibel Wohlfrom Patentanwälte Partnerschaft mbB
(86) International application number: PCT/JP2016/066564
(87) International publication number: WO 2017/006671

(57) **Abstract**

Providing a tactile sensation reproduction apparatus capable of giving a reaction force that stimulates a situation that an object is gripped by a finger. Including an input device 20 from a case 21 of the input device 20 two first operation bodies 33 and 33 and one second operation body 43 are protruded. By holding the second operation body 43 by a thumb while holding the first operation bodies 33 by an index finger and a middle finger, an operation same as gripping an object is performed. A control signal is supplied from a control unit to a motor in the case 21, and a reaction force of each of the first operation bodies 33 and the second operation body 43 is applied to a respective finger. At this time, a reaction force that simulates hard texture, soft texture or elastic feeling of the object can be applied to the finger.

## Description

### BACKGROUND OF THE INVENTION

### 1. Field of the Invention

The present invention relates to a tactile sensation reproduction apparatus capable of receiving, when touching an input device by a finger of a hand, a reaction force that simulates touching a predetermined object by the finger.

### 2. Description of the Related Art

Patent Document 1 describes an invention regarding a virtual space display device.

The virtual space display device is configured to communicate with a server at a terminal communication unit, and a touch panel including a liquid crystal display and an input unit is provided at the terminal communication unit.

An image of a shopping mall is displayed on the liquid crystal display of the touch panel by communication from the server. When a user drags the touch panel, a scene in the displayed shopping mall can be moved, and when the user taps a product (merchandise) thumbnail in the image of the shopping mall, detailed information of the product is displayed in a screen. The user can temporarily collect products planning to buy at a stock area, and can by the products by a payment process on the stocked products.

Patent Document 1: Japanese Laid-open Patent Publication No. 2012-234355

According to the virtual space display device described in Patent Document 1, the user can confirm prices and colors of products that are displayed in a store of the shopping mall, and can search a product to buy by referring to detailed information of the product.

However, as it is impossible to actually touch the product, the user cannot feel a size or texture of the product by a hand.

### SUMMARY OF THE INVENTION

The present invention is made in light of the above problems, and provides a tactile sensation reproduction apparatus capable of mechanically generating a reaction force that simulates a tactile sensation when touching a predetermined object by a hand.

According to an embodiment, there is provided a tactile sensation reproduction apparatus, including: an input device; a control unit; and a display panel that is controlled by the control unit, wherein the input device includes an operation body that is moved forward and backward by a pressing operation by a finger, a detection member that detects a moved position of the operation body, and a motor that provides a force to the operation body, wherein the display panel displays a simulation image of a hand and a finger and a simulation image of an object to be touched by a hand or a finger, wherein the control unit stores information regarding a reaction force when a hand or a finger touches the object to be touched, and wherein when the control unit detects that the operation body is pressed by a finger by a detection signal from the detection member, the control unit controls an output of the motor such that a force that stimulates the reaction force in accordance with the moved distance of the operation body is applied to the hand or the finger from the operation body.

In the tactile sensation reproduction apparatus of the invention, it is preferable that in the input device, a protruded position of the operation body from the case or a reaction force applied to a finger from the operation body is changed in accordance with a situation of a screen displayed in the display panel.

In the tactile sensation reproduction apparatus of the invention, it is preferable that a simulation image of a hand and a finger displayed in the display panel is changed in accordance with a situation of a screen displayed in the display panel, and in the input device, a protruded position of the operation body of the input device is changed to correspond to the change of the simulation image of the hand and the finger.

For example, a simulation image of an object is displayed in the display panel, and in the input device, a protruded position of the operation body is determined such that to correspond to a situation in which the simulation image of the object is gripped by a finger.

Alternatively, at least one of a menu image and a list image is displayed in the display panel, the simulation image of the hand is changed such that one of fingers points the menu image or the list image, and in the input device, the operation body on which the respective finger pointing the menu image or the list image touches is set at an operational position.

Then, an operation is determined when either of the menu image and the list image is selected by the simulation image of the finger, and the operation body is pressed by the respective finger.

In the tactile sensation reproduction apparatus of the invention, it is preferable that the control unit stores information regarding a size of the object to be touched, and when the control unit detects, from a detection signal from the detection member, that the operation body is moved for a distance corresponding to a moving amount by which a finger touches the object to be touched, the control unit controls an output of the motor so that the reaction force is started to be applied to the finger from the operation body at the detected position.

In the tactile sensation reproduction apparatus of the invention, in the input device, a plurality of tactile sensation generation units each including the operation body, the detection member and the motor are provided in the case, the operation bodies are protruding from the case in opposing directions, and when one of the operation bodies protruding in the opposing directions is pressed by a thumb and the other is pressed by an index finger, a reaction force that simulates a situation that the object to be touched is pinched by the thumb and the index finger is applied from the operation bodies to the thumb and the index finger, respectively.

Alternatively, in the input device, a plurality of tactile sensation generation units each including the operation body, the detection member and the motor are provided in the case, one of the operation bodies and a plurality of the operation bodies are protruding from the case in opposing directions, and when the one of the operation bodies protruding in one direction is pressed by a thumb and the plurality of the operation bodies protruding in the other direction are pressed by fingers other than the thumb, respectively, a reaction force that simulates a situation that the object to be touched is gripped by the plurality of fingers is applied from the operation bodies to the respective fingers, respectively.

Alternatively, when the operation body is pressed by a single finger, a reaction force regarding at least one tactile sensation among soft texture, hard texture and elastic feeling of the object to be touched is applied from the operation body to the finger.

In the tactile sensation reproduction apparatus of the invention, a line of action of a reaction force that indicates a relationship between the moved distance of the operation body and the reaction force is the same for a case when the operation body is pressed, and when the operation body is returning back.

Alternatively, a line of action of a reaction force that indicates a relationship between the moved distance of the operation body and the reaction force is different for a case when the operation body is pressed, and when the operation body is returning back.

In the tactile sensation reproduction apparatus of the invention, the reaction force may be applied from the operation body to the finger by changing electric power supplied to the motor step by step at a predetermined cycle.

In the tactile sensation reproduction apparatus of the invention, a line of action of a reaction force that indicates a relationship between the moved distance of the operation body and the reaction force corresponds to a reaction force generated in operation when the object to be touched may be a mechanism operation component.

In the tactile sensation reproduction apparatus of the invention, when the operation body provided in the input device is touched by a finger, a user can feel a tactile sensation same as touching a predetermined object to be touched by the finger, and can feel hardness, softness, repulsion and the like of the object to be touched.

Further, as a status of gripping the input device by the hand is changed in accordance with a change of an image displayed in the display panel, a user can feel that a displayed content in the displayed screen and an operation of the hand are always associating with each other.

Further, by operating the operation body provided in the input device, feeling of an object can be reproduced for a case in which an object displayed as an image is pinched by two fingers, the object is gripped by furthermore fingers, or the object is pressed by a single finger.

Further, by setting the line of action of a reaction force, a tactile sensation such as icky feeling can be reproduced in addition to hard texture, soft texture and elastic feeling.

### BRIEF DESCRIPTION OF THE DRAWINGS

Fig. 1 is a view for describing an example of using a tactile sensation reproduction apparatus of an embodiment;
Fig. 2 illustrates an input device provided in the tactile sensation reproduction apparatus illustrated in Fig. 1, wherein (A) is a perspective view seen from an upper side, and (B) is a perspective view seen from a lower side;
Fig. 3 is an exploded perspective view of the input device illustrated in Fig. 2;
Fig. 4 is a perspective view of a tactile sensation generation unit provided in the input device illustrated in Fig. 2;
Fig. 5 is a block diagram illustrating a structure of the tactile sensation reproduction apparatus of the embodiment;
Fig. 6 illustrates an example of using the tactile sensation reproduction apparatus of the embodiment, and is a view for describing a displayed image in which a menu display in a displayed screen is pointed by a single finger;
Fig. 7 illustrates an example of using the tactile sensation reproduction apparatus of the embodiment, and is a view for describing a displayed image in which a tactile sensation is reproduced when an object is pinched by two fingers;
Fig. 8 illustrates an example of using the tactile sensation reproduction apparatus of the embodiment, and is a view for describing a displayed image in which a tactile sensation is reproduced when an object is gripped by a plurality of fingers;
Fig. 9 illustrates an example of using the tactile sensation reproduction apparatus of the embodiment, and is a view for describing a displayed image in which a tactile sensation is reproduced when an object is pressed by a single finger;
Fig. 10 is a diagram illustrating an example of a line of action of a reaction force indicating a relationship between a moved distance of an operation body and a reaction force;
Fig. 11 is a diagram illustrating an example of a line of action of a reaction force indicating a relationship between a moved distance of an operation body and a reaction force;
Fig. 12 (A) is a diagram illustrating an example of a line of action of a reaction force indicating a relationship between a moved distance of an operation body and a reaction force, and Fig. 12 (B) is a diagram illustrating an example of supplying electric power to a motor for reproducing (A); and
Fig. 13 is a diagram illustrating an example of a line of action of a reaction force indicating a relationship between a moved distance of an operation body and a reaction force.

### DETAILED DESCRIPTION OF THE PREFERRED EMBODIMENTS

### (Entire structure)

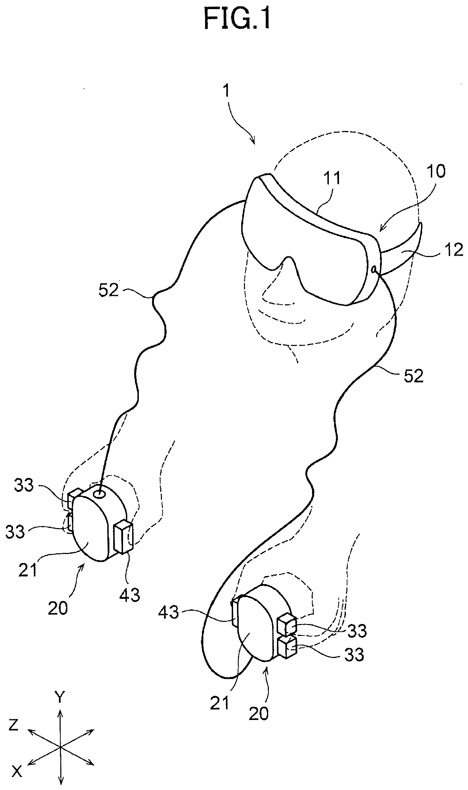

Fig. 1 illustrates a state in which a tactile sensation reproduction apparatus 1 of the invention is used.

The tactile sensation reproduction apparatus 1 includes a device body 10 and an input device 20. In Fig. 1, two same input devices 20 are used, and one of the input devices 20 is used by a right hand and the other of the input devices 20 is used by a left hand. However, as an example of using the tactile sensation reproduction apparatus 1, only one of the input devices 20 is used and may be operated by a single hand.

The device body 10 includes a mask-shaped main body 11 worn in front of eyes, and a strap 12 for wearing the mask-shaped main body 11 on a head.

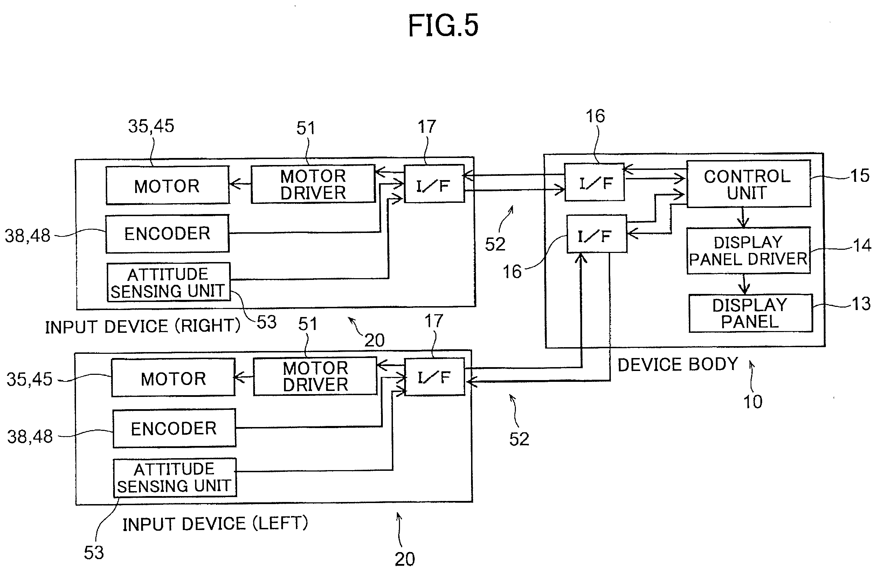

As illustrated in a block diagram of Fig. 5, a display panel 13 is provided in the mask-shaped main body 11 of the device body 10. The display panel 13 is provided in front of the operator and is viewable. The mask-shaped main body 11 includes its inside a display panel driver 14 for driving the display panel 13, and a control unit 15 that controls a display configuration of the display panel driver 14. The control unit 15 is mainly configured by a CPU and a memory. Interfaces 16 for receiving and sending signal between the control unit 15 and each of the input devices 20 are provided in the mask-shaped main body 11.

The display panel 13 is not limited to one that is provided in the mask-shaped main body 11, and may be a display panel provided on a table or the like, and used as a display screen of a personal computer, a display screen of a television, or a display screen of a game device, for example.

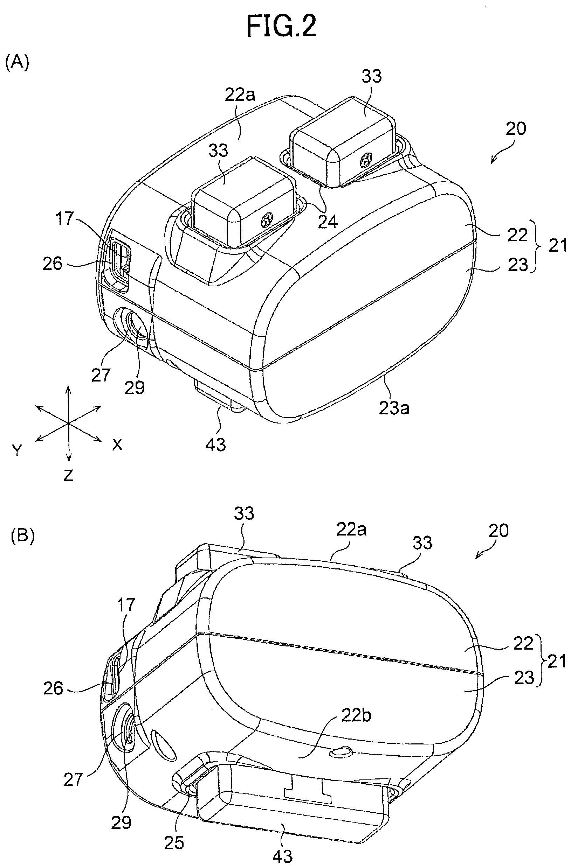

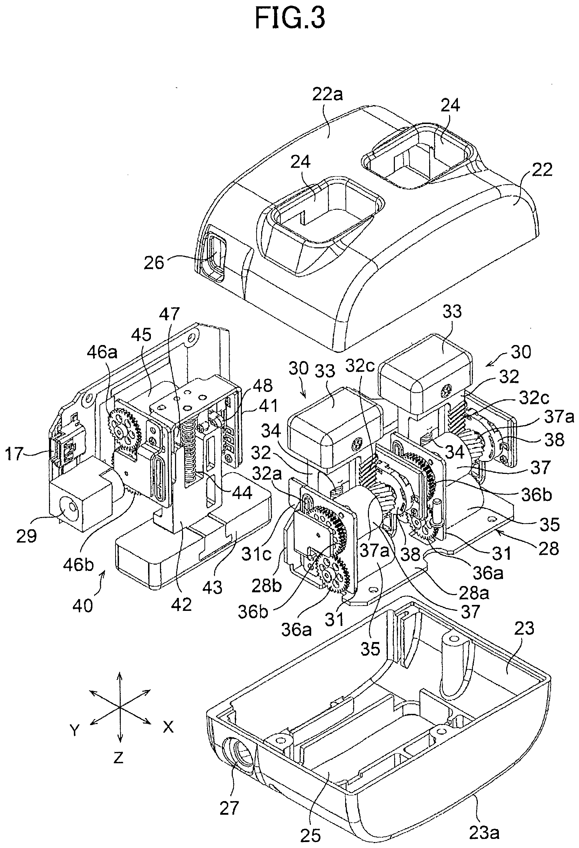

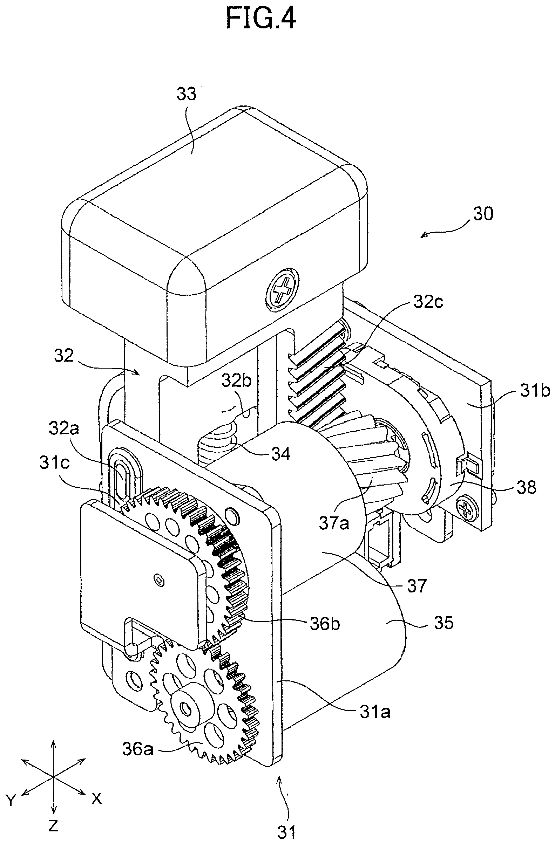

Fig. 2 (A) illustrates a perspective view of the input device 20 seen from an upper side, and Fig. 2(B) illustrates a perspective view of the input device 20 seen from a lower side. Fig. 3 is an exploded perspective view of the input device 20. Fig. 4 illustrates a structure of a first tactile sensation generation unit 30 included in the input device 20. An X-Y-Z coordinate that is on the basis of the input device 20 is illustrated in each of Fig. 2 (A), Fig. 3 and Fig. 4. For the input device 20, a Z direction is a first direction, a Y direction is a second direction and an X direction is a third direction.

In a usage example of Fig. 1, each of the input devices 20 has an attitude in which the Y direction, which is the second direction, is extending up and down, and the input devices 20 are held by both hands.

As illustrated in Fig. 2, the input device 20 includes a case 21 made of synthetic resin. The case 21 has a size capable of being held by a single hand. The case 21 is configured by a combination of an upper case 22 and a lower case 23. As illustrated in Fig. 3, the upper case 22 and the lower case 23 can be separated in the Z direction, which is the first direction. The upper case 22 and the lower case 23 are fixed with each other by screw means or the like, and a space for housing a mechanism is formed in the two cases 22 and 23.

A surface of the upper case 22 that faces in the Z direction is a first surface 22a, and a surface of the lower case 23 that faces in the Z direction is a second surface 23a. As illustrated in Fig. 3, operation holes 24 and 24 each penetrating the first surface 22a in the Z direction are formed at the upper case 22. An operation hole 25 penetrating the second surface 23a in the Z direction is formed at the lower case 23. The operation holes 24 and 24 are aligned in the second direction (Y direction), and the open size of the operation hole 25 in the second direction (Y direction) is larger than that of each of the operation holes 24.

A connector insertion hole 26 is opened at an end surface of the upper case 22 that faces in the second direction (Y direction), and a power supply plug insertion hole 27 is opened at an end surface of the lower case 23 that faces in the Y direction.

As illustrated in Fig. 3, a mechanism chassis 28 is housed in the space for housing the mechanism in the case 21. The mechanism chassis 28 is formed by bending a metal plate, and an attachment plate portion 28a that is parallel to an X-Y plane, and a partition plate portion 28b that is parallel to a Y-Z plane are formed.

A plurality of the first tactile sensation generation units 30 are fixed at one side of the partition plate portion 28b in the third direction (X direction). According to the input device 20 of the embodiment, two of the first tactile sensation generation units 30 are aligned in the second direction (Y direction). A single second tactile sensation generation unit 40 is placed at the other side of the partition plate portion 28b in the X direction.

### (Structure of tactile sensation generation unit)

Fig. 4 illustrates a structure of the first tactile sensation generation unit 30.

The first tactile sensation generation unit 30 includes a frame 31 that is formed by bending a metal plate 30. The first tactile sensation generation unit 30 is mounted on the mechanism chassis 28 by attaching the frame 31 to the partition plate portion 28b.

A movable member 32 is provided at the frame 31. The movable member 32 is formed by a synthetic resin material, and a first operation body 33 is fixed at a front portion of the movable member 32. The first operation body 33 is formed by a synthetic resin material. As illustrated in Fig. 2, the first operation body 33 protrudes outside from the operation hole 24 formed at the upper case 22.

A guide long hole 31c that extends in the first direction (Z direction) is formed at a side plate portion 31a of the frame 31, and a slidable protruding portion 32a is integrally formed at a side portion of the movable member 32. The movable member 32 is movably supported on the frame 31 in the first direction (Z direction) by sliding the slidable protruding portion 32a in the guide long hole 31c. The movable member 32 includes a concave portion 32b. A compression coil spring 34 is interposed between the movable member 32 and a lower end portion of the frame 31, inside the concave portion 32b. The movable member 32 is pushed upward in the Z direction, in which the first operation body 33 protrudes from the upper case 22, by an elastic force of the compression coil spring 34.

A motor 35 is fixed to the sidewall portion 31a of the frame 31. An output gear 36a is fixed to an output shaft of the motor 35. A reduction gear 36b is rotatably supported at an outer surface of the sidewall portion 31a, and the output gear 36a and the reduction gear 36b are engaging with each other. A gear box 37 is fixed to the sidewall portion 31a of the frame 31, and a reduction mechanism is housed in the gear box 37. A rotary force of the reduction gear 36b is reduced by the reduction mechanism in the gear box 37. The reduction mechanism in the gear box 37 is configured by a sun gear, a planet gear and the like.

A pinion (PIN pin) 37a is fixed to a reduction output shaft of the gear box 37. A rack portion 32c is formed at a surface of a thick portion of the movable member 32, and the pinion 37a and the rack portion 32c are engaging with each other. A teeth portion of the pinion 38a and a teeth portion of the rack portion 32c are inclined teeth that are inclined with respect to the Y direction that is oblique to a moving direction of the movable member 32.

By providing the compression coil spring 34, backlash between the pinion 38a and the rack portion 32c can be eliminated. However, the compression coil spring 34 may not be provided.

An encoder 38 is fixed at another sidewall portion 31b of the frame 31. The encoder 38 is a detection member including a stator portion fixed to the sidewall portion 31b, and a rotor portion facing the stator portion and rotating. A rotor shaft provided at the rotor portion rotates with the pinion 37a. The encoder 38 may be a resistance variation type, and an arc resistive pattern is provided at the stator portion, and a slider that slides the resistive pattern is provided at the rotor portion. Here, the encoder 38 may be a magnetic detection type, and may be a detection member in which a rotation magnet is fixed at the rotor portion, a magnetic detection element such as a GMR element is provided at the stator portion, and a rotation angle of the rotor portion is detected by the magnetic detection element. Alternatively, the encoder 38 may be an optical encoder.

As illustrated in Fig. 3, the second tactile sensation generation unit 40 is provided at the other side of the partition plate portion 28b of the mechanism chassis 28.

The second tactile sensation generation unit 40 has a basic structure same as that of the first tactile sensation generation unit 30. In the second tactile sensation generation unit 40, the movable member 42 is movably supported on a frame 41 in the Z direction, and a second operation body 43 is fixed at a front portion of the movable member 42. The second operation body 43 protrudes downwardly from the operation hole 25 of the lower case 23. The movable member 42 is pushed by a compression coil spring 44 in a direction in which the second operation body 43 protrudes from the operation hole 25.

A motor 45 is fixed to the frame 41, and an output gear 46a fixed to an output shaft of the motor 45 engages with a reduction gear 46b. A rotary force of the reduction gear 46b is reduced by a reduction mechanism in a gear box 47, and the reduced output is transmitted from a pinion to a rack portion formed at the movable member 42. Then, the rotation of the pinion is detected by an encoder 48.

As illustrated in Fig. 3, a signal connector 17 and a power supply plug 29 are included inside the case 21. The signal connector 17 is exposed inside the connector insertion hole 26 formed at the upper case 22, and the power supply plug 29 is exposed inside the power supply plug insertion hole 27 formed at the lower case 23.

As illustrated in the block diagram of Fig. 5, a motor driver 51 is provided inside each of the input devices 20. The motor 35 provided in the first tactile sensation generation unit 30 and the motor 45 provided in the second tactile sensation generation unit 40 are driven and rotated by the motor driver 35. The signal connector 17 is a USB interface, and in Fig. 5, a reference "17", which is the same as the signal connector 17 illustrated in Fig. 3, is given to an interface provided in the input device 20.

As illustrated in Fig. 1, the interface 16 of the device body 10 and the interface 17 of each of the input devices 20 is connected by a cord 52. A power source line is included in the cord 52, and the power source line is connected to the power supply plug 29. An electric power is supplied from the device body 10 to the input device 20 via the power source line.

Here, the device body 10 and each of the input devices 20 may be capable of communicating with each other by an RF signal, and a battery may be included in each of the input devices 20. In such a case, the cord 52 connecting the device body 10 and each of the input devices 20 is unnecessary.

Further, it is preferable that the device body 10 further has a communication function with the server.

Next, an operating method and an operation of the tactile sensation reproduction apparatus 1 are described.

### (Holding of input device 20 by hand)

As illustrated in Fig. 2, in the input device 20, the plurality of the first operation bodies 33 are protruded at the first surface 22a, and the single second operation body 43 is protruded at the second surface 22b, of the case 21. The first operation bodies 33 and the second operation body 43 are protruding in opposite directions in the first direction (Z direction). Thus, as illustrated in Fig. 1, it is possible to hold the input device 20 by a single hand by pressing the second operation body 43 by a thumb and pressing the first operation bodies 33 and 33 by an index finger and a middle finger, respectively.

Although the plurality of first operation bodies 33 are aligned in the second direction (Y direction), the length of the second operation body 43 in the Y direction is longer than the length of the first operation body 33 in the Y direction. As a result, both of the two first operation bodies 33 and 33 face with the second operation body 43 in the first direction (Z direction). Thus, a broad range of the second operation body 43 can be held by the thumb while pressing the first operation bodies 33 and 33 by the index finger and the middle finger, respectively.

Further, each of the first operation bodies 33 and 33 and the second operation body 43 is positioned at a center portion of the case 21 in the X direction (third direction). The input device 20 is almost in plane symmetry with respect to an X-Z plane, and is almost in plane symmetry with respect to a Y-Z plane as well. Thus, the input device 20 can be similarly held from a right side and a left side in the X direction in the drawing. Therefore, the input device 20 is easily handled.

### (Operation of input device 20)

In the input device 20, a control command is supplied from the control unit 15 to the motor driver 51, and the motor 35 of the first tactile sensation generation unit 30 and the motor 45 of the second tactile sensation generation unit 40 are operated by the control command. By controlling rotations of the motor 35 and the motor 45, the movable member 32 and the movable member 42 can be moved to desired positions and can be stopped at the positions. For example, it is possible to stop the operation body 33 and the operation body 43 at positions that are protruded from the case 21 at the maximum, or to stop the operation body 33 and the operation body 33 at positions that are backslid in the case 21 at the maximum. Further, it is possible to stop the operation body 33 and the operation body 43 at desired positions between the maximum protruded position and the maximum backslid position, respectively.

Then, by controlling electric power supplied to each of the motor 35 and the motor 45, rotors of the motors 35 and 45 can be retained by strong forces so that the operation body 33 and the operation body 43 protruded from the case 21 are not moved.

Under a state in which the movable member 32 and the movable member 42 are movable, when the operation body 33 or the operation body 43 is pressed, and the movable member 32 or 42 is moved in a pushdown direction, a detection output from the encoder 38 or the encoder 48 is supplied to the control unit 15. Then, the control unit 15 recognizes a moved position of the operation body 33 or the operation body 43. The control unit 15 stores a line of action of a reaction force (coefficient of action of a reaction force) that indicates a relationship between a moved distance and a reaction force. Then, the motor 35 or the motor 45 generates a torque in accordance with the moved position of the operation body 43 or the operation body 43 corresponding to the line of action of a reaction force, and a reaction force is provided to a finger from the operation body 33 or the operation body 43.

### (Tactile sensation reaction force generated at tactile sensation reproduction apparatus 1)

In the tactile sensation reproduction apparatus 1, information of an object, which is a target to simulatively hold by a hand, such as a shape and a size of the object, hard texture, soft texture and further elastic feeling of its surface is stored in the control unit 15.

For example, information regarding a plurality of products in a product catalog including predetermined products is stored in the control unit 15. This information is downloaded from a server to the control unit 15 via the INTERNET or the like. Alternatively, the information of the object may be stored in the control unit 15 by connecting a storage medium storing the product catalog or the like to the device body 10.

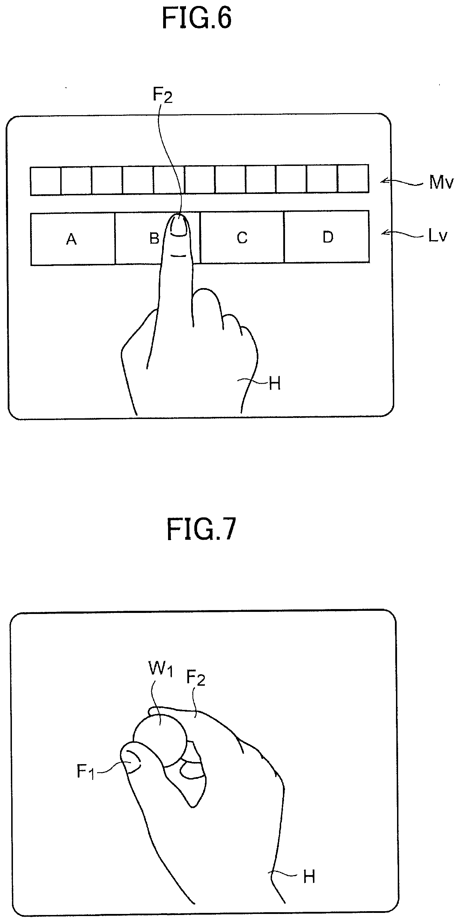

As illustrated in Fig. 6, when the tactile sensation reproduction apparatus 1 is activated, a menu image Mv and a list image Lv of a product catalog are displayed in the display panel 13 for performing a display operation. By moving the input device 20 while seeing the displayed content, a menu or a list can be selected, and a product to be displayed can be selected.

In the tactile sensation reproduction apparatus 1, in accordance with a situation of a screen displayed in the display panel 13, a protruded position of each of the operation bodies 33 and 34 from the case 21 or a reaction force applied from each of the operation bodies 33 and 34 to a respective finger is changed in the input device 20.

When a displayed image of the display panel 13 is a menu display as illustrated in Fig. 6, a simulation image of a hand H shown in a displayed screen is displayed such that only an index finger F2 extends and other fingers are closed. In accordance with this, a state setting command is supplied from the control unit 15 to the input device 20, and in the input device 20, only one of the first operation bodies 33 held by the index finger is operational or enabled, and the other of the first operation bodies 33 and the second operation body 43 are moved backward not to protrude from the case 21 so much. Alternatively, the operation bodies 33 and 43 that are held by the fingers other than the index finger are set not to be moved by increasing loads of the respective motors 35 and 45.

As illustrated in Fig. 5, an attitude sensing unit 53 is provided in the input device 20. The attitude sensing unit 53 is, for example, a magnetic sensor that detects a geomagnetic sensor or a vibrating gyro device, and can detect an attitude of the input device 20 in an operation space or a position of the input device 20 in the operation space.

When the input device 20 is moved and further its attitude is changed while seeing the product catalog displayed in the display panel 13, the simulation image of the hand H in the displayed screen is moved. Then, when either of the menu image Mv and the list image Lv is selected by the index finger F2, a product to be displayed is selected by the selection operation. Then, when the operation body 33 is pressed by the index finger, the operation is detected by the encoder 38. Then, a detection signal from the encoder 38 is sent to the control unit 15. With this, a fact that the first operation body 33 is pressed can be detected by the control unit 15, and the selection of the product is determined.

Here, the operation to select and determine the menu image Mv or the list image Lv illustrated in Fig. 6 may be performed by an operation by the middle finger or the thumb instead of the index finger.

In a display configuration illustrated in Fig. 6, the menu image Mv or the list image Lv is an object to be touched.

When the product is selected, the product is specified as an object that is an object to be touched by a hand. As illustrated in Fig. 7 to Fig. 9, when the object to be touched by the hand is specified, an image of the specified object W1, W2 or W3 and a simulation image that stimulates a hand H of an operator are displayed in the display panel 13.

A position and an attitude of the input device 20 held by the hand in a space are detected by the attitude sensing unit 53, and the detected information is supplied to the control unit 15. In the control unit 15, a simulation image to be displayed in the display panel 13 is generated in accordance with the attitude of the input device 20. Then, a position and an attitude of each of a simulation image of the hand H and a simulation image of a finger to be displayed in the display panel 13 are changed in accordance with the position and the attitude of the input device 20.

Here, an image of various shops may be displayed in the display panel 13, and a product that is exhibited in the displayed shops may be selected by holding and operating the input device 20 by a hand to specify the object to be touched by the hand.

The object W1 illustrated in Fig. 7 has a size capable of being pinched by the thumb F1 and the index finger F2. In the display panel 13, it is displayed such that the object W1 is gripped by a simulation image of the thumb F1 and a simulation image of the index finger F2.

As the object W1 is pinched only by the thumb F1 and the index finger F2 in a display example of Fig. 7, it is displayed such that the middle finger or other fingers are closed in the simulation image of the hand H in the display panel 13.

In such a case, a state setting command is supplied from the control unit 15 to the motor driver 51 of the input device 20, and the second operation body 43 on which the thumb F1 touches and one of the first operation bodies 33 on which the index finger F2 touches are made operational. For the first operation body 33 that faces the middle finger, the first operation body 33 that faces the middle finger is moved backward not to protrude from the first surface 22a of the case 21 by operating the motor 35 of the respective first tactile sensation generation unit 30. Alternatively, the first operation body 33 touched by the middle finger is set not to be moved by providing a large load to the motor 35 of the respective first tactile sensation generation unit 30 so that the rotor is not readily rotated.

In other words, the input device 20 is configured such that the protruded position of each of the operation bodies 33 and 43 from the case 21 or the reaction force applied to the finger from each of the operation bodies 33 and 43 is changed depending on a type of the object displayed in the display panel 13.

When the first operation body 33 and the second operation body 43 are pressed by actual fingers, the positional information is supplied from the encoders 38 and 48 to the control unit 15, respectively. Then, the control unit 15 controls the display in which the simulation image of the thumb F1 and the simulation image of the index finger F2 displayed in the display panel 13 are close to each other corresponding to a distance between the first operation body 33 and the second operation body 43.

In other words, simulation images of a hand and a finger are changed in accordance with the movement of each of the operation bodies 33 and 43 provided in the input device 20.

A detection signal from the encoder 38 of the first tactile sensation generation unit 30 that is touched by the index finger F2 and a detection signal from the encoder 48 of the second tactile sensation generation unit 40 that is touched by the thumb F1 are supplied to the control unit 15. Then, the control unit 15 compares information of a shape and a size of the object W1, and the detection signals from the encoders 38 and 48. When the second operation body 43 and the first operation body 33 are started to be pressed by the thumb F1 and the index finger F2, the motors 35 and 45 are set such that rotational loads are not generated at all and the thumb F1 and the index finger F2 do not sense the loads, and the operator feels as if the thumb F1 and the index finger F2 are freely moving in a space.

When a space between the thumb F1 and the index finger F2 becomes a distance corresponding to the size of the object W1, based on the detection signals from the encoders 38 and 48, a control command is supplied from the control unit 15 to the motor driver 51, and rotational loads are provided to the motors 35 and 45. With this, reaction forces as if the object W1 is actually pinched are provided to the thumb F1 and the index finger F2.

Here, when the second operation body 43 and the first operation body 33 are started to be pressed by the thumb F1 and the index finger F2, respectively, weak driving forces may be generated in the motors 35 and 45, respectively, and locomotion to causing the second operation body 43 and the first operation body 33 to be close to each other may be given. Then, when a space between the thumb F1 and the index finger F2 becomes a distance corresponding to the size of the object W1, loads may be given to the motors 35 and 45, respectively. By actuating as such, it is possible for the user to feel as if there is no resistance against each of the fingers when starting to operate the thumb F1 and the index finger F2. Further, elastic forces of the compression coil springs 34 and 44 can be also canceled. Thus, the user can be more easily feel as if freely moving the thumb F1 and the index finger F2 in a space and pinching the object W1.

Alternatively, the protruded position of each of the first operation body 33 on which the index finger F2 touches and the second operation body 43 on which the thumb F1 touches from the case 21 may be determined in accordance with the shape and the size of the simulation image of the object W1 displayed in the display panel 13.

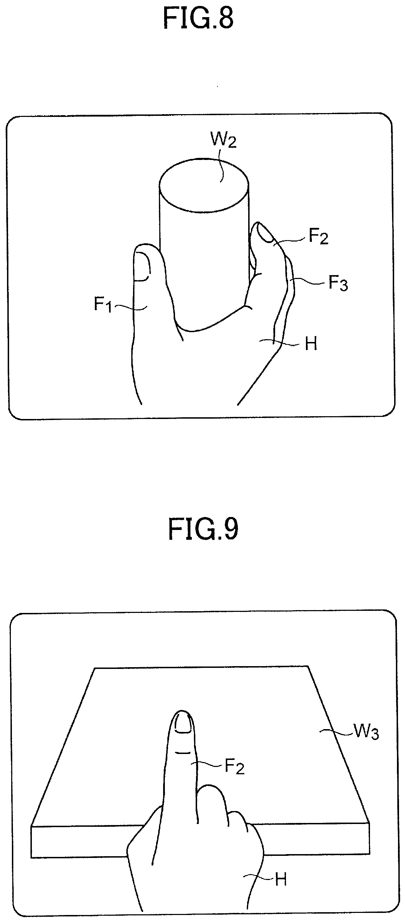

Next, the object W2 illustrated in Fig. 8 has a size capable of being held by a single hand, in other words, the object W2 has a size capable of being held by the thumb F1, the index finger F2 and the middle finger F3.

When the object W2 is selected as the object to be touched and a simulation image of the object W2 is displayed in the display panel 13, the simulation image of the hand H and the finger is changed such that to hold the object W. A state setting command is supplied from the control unit 15 to the input unit 20, and the input device 20 is changed in accordance with the shape or the size of the object W2, or in accordance with the simulation image of the hand. Then, the protruded position of each of the first operation bodies 33 and the second operation body 43 is set in the input device 20. With this, the user can feel as if gripping the object W2 displayed in the screen by an actual hand.

In such a case, detection outputs from the encoders 38 and 38 provided in the two tactile sensation generation units 30 and a detection output from the encoder 48 provided in the tactile sensation generation unit 40, provided in the input device 20, are supplied to the control unit 15, and the control unit 15 controls the three motors 35, 35 and 45.

Further, when the second operation body 43 is pressed by the thumb F1, and the two first operation bodies 33 and 33 are pressed by the index finger F2 and the middle finger F3, when they are started to be pressed, loads are not applied to the motors 35, 35 and 45, or alternatively, the movable members 32, 32 and 42 are moved to directions that make the operation bodies 33 and 33 and the operation body 34 moved close to each other. With this, the user can feel as if the fingers F1, F2 and F3 are moving in a space. When a space between the fingers F1, F2 and F3 matches a distance of an outline of the object W2, loads are applied to the motors 35, 35 and 45. With this, it is possible to control to generate a reaction force that gives a feeling same as gripping the object W2 by the fingers F1, F2 and F3.

Next, the object W3 illustrated in Fig. 9 is capable of being touched by the index finger F2 of a single hand.

When an image of the object W3 is displayed in the display panel 13, by a state setting command from the control unit 15, a rotational load of the motor 35 of the first tactile sensation generation unit 30 on which the middle finger F3 touches is made large and a rotational load of the motor 45 of the second tactile sensation generation unit 40 on which the thumb F1 touches is made large so that the first operation body 33 on which the middle finger F3 touches and the second operation body 43 on which the thumb F1 touches are not moved, while only the first operation body 33 on which the index finger F2 touches is made movable.

As such, in the input device 20, statuses of the operation bodies 33 and 43 are set in accordance with the simulation image of the object (object to be touched) W2 and also the simulation image of the hand H displayed in the display panel 13.

Under an actual movement of the index finger F2 to touch the object W2, the attitude and the position of the hand are sensed by the attitude sensing unit 53 included in the input device 20. As illustrated in Fig. 9, while seeing an image of the hand H displayed in the display panel 13, a user takes an attitude in which the back of the hand holding the input device 20 faces upward and moves the hand forward to be closer to the image of the object W3. At this time, a load is not applied to the motor 35 of the first tactile sensation generation unit 30 on which the index finger F2 touches, and the operator feels as if freely moving the index finger F2 in a space. Then, when the index finger F2 touches the surface of the object W3 in the image, a rotational load to the motor 35 of the first tactile sensation generation unit 30 is increased, and a reaction force that makes the user feel as if the index finger F2 touches the surface of the object W3 is applied from the first operation body 33 to the index finger F2.

In such a case, as illustrated in Fig. 9, the simulation image of the hand H displayed in the display panel 18 is shown such that fingers other than the index finger F2 are closed.

### (Hard texture, soft texture, repulsion and the like)

The control unit 15 monitors a detection signal of each of the encoders 38 and 48. Then, as illustrated in Fig. 7 to Fig. 9, when it is determined that a space between fingers becomes a distance as if gripping the object W1 or W2, or it is determined that the finger moves to a position as if touching the object W3, the control unit 15 supplies a control signal to the motor driver 51 for causing a sense of texture. Then, strength of a reaction force applied from each of the first operation body 33 and the second operation body 43 to the respective fingers is controlled, and a reaction force is applied to the respective finger to feel hard texture, soft texture and further elastic feeling of the object W1, W2 or W3.

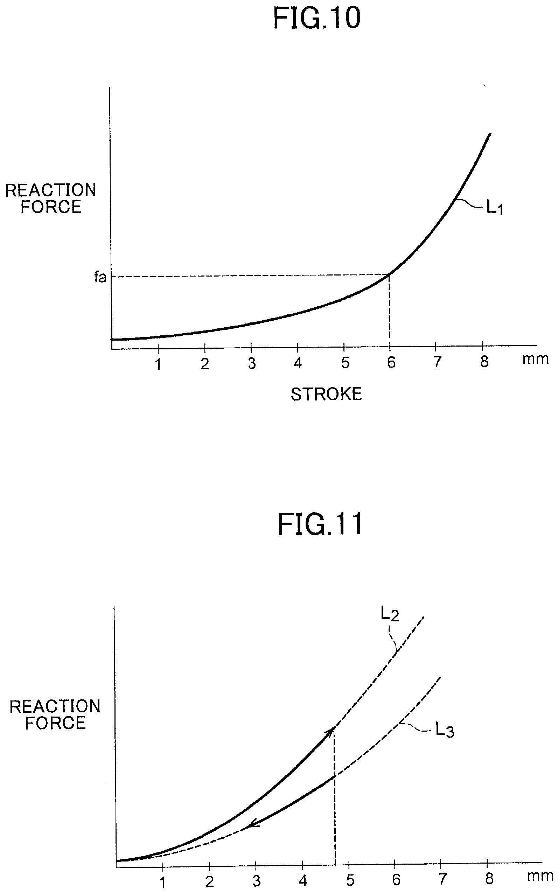

Fig. 10 illustrates an example of a line of action of a reaction force (coefficient of action of a reaction force) L1 indicating a relationship between a pressing stroke of each of the operation bodies 33 and 43 and a reaction force applied from each of the operation bodies 33 and 43 to a finger.

Under a control to make a user feel the texture, when a position of each of the operation bodies 33 and 43 is detected by the detection output from the respective encoder 38 or 48, the reaction force is determined from the pressing stroke at that time based on the line of action of a reaction force L1. According to the line of action of a reaction force L1 illustrated in Fig. 10, the reaction force sensed by the finger becomes larger as each of the operation bodies 33 and 43 is further pushed.

For example, when a pressing stroke of the operation bodies 33 and 43 becomes 6 mm, a reaction force of "fa" is applied to a finger. The reaction force "fa" may be a total of the reaction force applied to the thumb F1 and the reaction force applied to the index finger F2, or the reaction force "fa" may be applied to both of the thumb f1 and the index finger F2. This is the same for the case when the reaction force is applied to each of the thumb F1, the index finger F2 and the middle finger F3. Further, as illustrated in Fig. 9, when the object W3 is pressed only by the index finger F2, the reaction force "fa" is applied to the index finger F2.

According to the line of action of a reaction force L1 illustrated in Fig. 10, when a force of the finger that is pushed to the pressing stroke 6 mm is lowered, the movable members 32, 32 and 42 are driven to protruding directions by the reaction force fa at that time, and the fingers are pushed back by the operation bodies 33 and 43. Thereafter, when the pressing stroke returns to 5 mm, 4 mm and 3 mm, the reaction force felt by the finger is lowered.

When the line of action of a reaction force L1 is set, it is possible to cause a user feel as if the pinched object W1, the object W2 gripped by the fingers or the object W3 pressed by the index finger has elasticity. Here, by changing the line of action of a reaction force illustrated in Fig. 10, hard texture, soft texture and elastic feeling can be freely set.

At the setting of the reaction force illustrated in Fig. 11, a line of action of a reaction force L2 that is applied to a finger when pressing the operation bodies 33 and 43, and a line of action of a reaction force L3 that is applied to the finger when the operation bodies 33 and 43 are returning back are set by different curves.

According to this setting of the reaction force, for example, a reaction force felt by each finger gradually becomes large in accordance with the line of action of a reaction force L2 when the operation bodies 33 and 43 are pressed by fingers and until the pressing stroke reaches approximately 5 mm. When lowering the force of the finger pressing the respective operation body upon reaching the pressing stroke of 5 mm, the finger is pushed back by the reaction force set by the line of action of a reaction force L2. However, when the encoders 38 and 48 detect that the operation bodies 33 and 43 are moved back with the fingers, thereafter, a reaction force of returning is applied to the fingers from the operation bodies 33 and 43 based on the line of action of a reaction force L3.

According to the setting of the reaction force illustrated in Fig. 11, elastic feeling having an elastic force and having a viscosity such as the returning is deteriorated after being pushed can be generated.

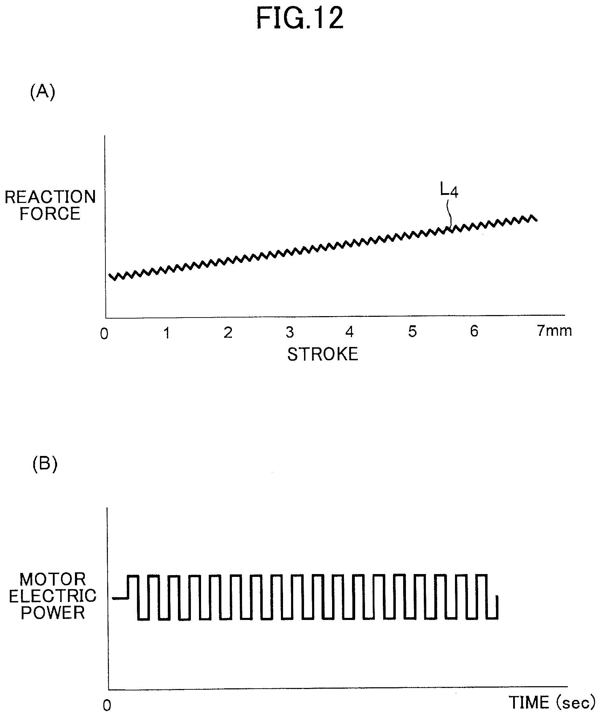

Next, according to a line of action of a reaction force L4 illustrated in Fig. 12 (A), although a reaction force is gradually increased in accordance with increasing of a pressing stroke of each of the operation bodies 33 and 43, this reaction force is changed step by step such as oscillating at a short cycle. In other words, although electric power supplied to each of the motors 35 and 45 becomes larger as the pressing stroke becomes longer, and the reaction force gradually increases, at this time, as illustrated in Fig. 12 (B), the electric power supplied to the motor is controlled to increase and decrease at a predetermined period. The period is, for example, less than or equal to 10 msec.

As such, by changing the torque of each of the motors 35 and 45 step by step, the reaction force applied from each of the operation bodies 33 and 43 to the respective finger of the operator can be icky feeling. This means that a reaction force similar to that obtained by pressing a viscoelastic body can be obtained. This icky feeling can be set by changing the period or a duty ratio of supplying the electric power illustrated in Fig. 12 (B).

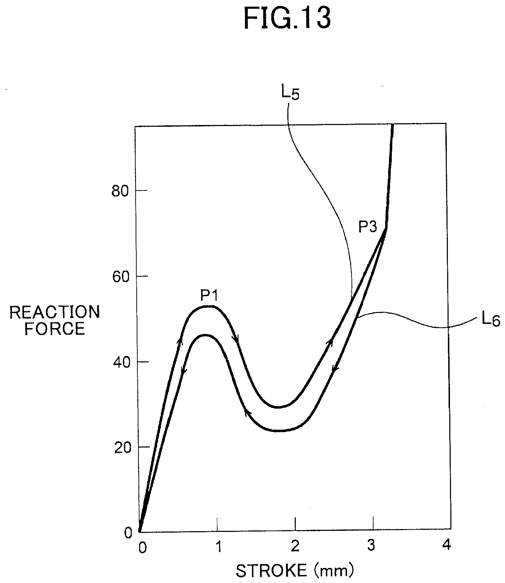

Lines of reaction force action L5 and L6 illustrated in Fig. 13 are set by simulating an operation reaction force when an object displayed in the display panel 13 is an electronic mechanism component and is a push switch, for example.

When the first operation body 33 is pressed by the index finger F2 as if an operation knob of a push switch displayed in a screen is pressed by the index finger, when pressing, a reaction force is generated in accordance with the line of action of a reaction force L5 illustrated in Fig. 13, and when the force of the finger is lowered, a reaction force is applied to the finger in accordance with the line of action of a reaction force L6.

With this, a user can know an operation feeling of the push switch selected as the image by a feeling of a finger.

Here, as a reaction force to a finger generated by the tactile sensation generation units 30 and 40 of the input device 20, for example, a case may be adopted in which elasticity is given by the reaction force at a start of pressing by the finger, and after further pressing to the middle, the reaction force becomes strong so that further pressing is impossible. This simulates feeling when pressing a surface of a hand by the finger.

Further, the operation bodies 33 and 43 may be vibrated, and a reaction force as if touching a small animal by fingers may be given by providing the vibration to the fingers.
W1, W2, W3 object
1 tactile sensation reproduction apparatus
10 device body
11 mask-shaped main body
13 display panel
15 control unit
20 input device
21 case
22a first surface
23a second surface
24, 25 operation hole
28 mechanism chassis
30 first tactile sensation generation unit
32 movable member
33 first operation body
35 motor
38 encoder
40 second tactile sensation generation unit
42 movable member
43 second operation body
45 motor
48 encoder (detection member)
W1, W2, W3 object
L1, L2, L3, L4, L5, L6 line of action of a reaction force

## Claims

1. A tactile sensation reproduction apparatus, comprising:
an input device;
a control unit; and
a display panel that is controlled by the control unit,
wherein the input device includes
an operation body that is moved forward and backward by a pressing operation by a finger,
a detection member that detects a moved position of the operation body, and
a motor that provides a force to the operation body,
wherein the display panel displays a simulation image of a hand and a finger and a simulation image of an object to be touched by a hand or a finger,
wherein the control unit stores information regarding a reaction force when a hand or a finger touches the object to be touched, and
wherein when the control unit detects that the operation body is pressed by a finger by a detection signal from the detection member, the control unit controls an output of the motor such that a force that stimulates the reaction force in accordance with the moved distance of the operation body is applied to the hand or the finger from the operation body.

2. The tactile sensation reproduction apparatus according to claim 1, wherein in the input device, a protruded position of the operation body from the case or a reaction force applied to a finger from the operation body is changed in accordance with a situation of a screen displayed in the display panel.

3. The tactile sensation reproduction apparatus according to claim 1 or 2,
wherein a simulation image of a hand and a finger displayed in the display panel is changed in accordance with a situation of a screen displayed in the display panel, and
wherein in the input device, a protruded position of the operation body of the input device is changed to correspond to the change of the simulation image of the hand and the finger.

4. The tactile sensation reproduction apparatus according to claim 3,
wherein a simulation image of an object is displayed in the display panel, and
wherein in the input device, a protruded position of the operation body is determined such that to correspond to a situation in which the simulation image of the object is gripped by a finger.

5. The tactile sensation reproduction apparatus according to claim 3,
wherein at least one of a menu image and a list image is displayed in the display panel, the simulation image of the hand is changed such that one of fingers points the menu image or the list image, and
wherein in the input device, the operation body on which the respective finger pointing the menu image or the list image touches is set at an operational position.

6. The tactile sensation reproduction apparatus according to claim 5, wherein an operation is determined when either of the menu image and the list image is selected by the simulation image of the finger, and the operation body is pressed by the respective finger.

7. The tactile sensation reproduction apparatus according to any one of claims 1 to 4,
wherein the control unit stores information regarding a size of the object to be touched,
wherein when the control unit detects, from a detection signal from the detection member, that the operation body is moved for a distance corresponding to a moving amount by which a finger touches the object to be touched, the control unit controls an output of the motor so that the reaction force is started to be applied to the finger from the operation body at the detected position.

8. The tactile sensation reproduction apparatus according to any one of claims 1 to 4,
wherein in the input device, a plurality of tactile sensation generation units each including the operation body, the detection member and the motor are provided in the case, the operation bodies are protruding from the case in opposing directions, and
wherein when one of the operation bodies protruding in the opposing directions is pressed by a thumb and the other is pressed by an index finger, a reaction force that simulates a situation that the object to be touched is pinched by the thumb and the index finger is applied from the operation bodies to the thumb and the index finger, respectively.

9. The tactile sensation reproduction apparatus according to any one of claims 1 to 4,
wherein in the input device, a plurality of tactile sensation generation units each including the operation body, the detection member and the motor are provided in the case, one of the operation bodies and a plurality of the operation bodies are protruding from the case in opposing directions, and
wherein when the one of the operation bodies protruding in one direction is pressed by a thumb and the plurality of the operation bodies protruding in the other direction are pressed by fingers other than the thumb, respectively, a reaction force that simulates a situation that the object to be touched is gripped by the plurality of fingers is applied from the operation bodies to the respective fingers, respectively.

10. The tactile sensation reproduction apparatus according to any one of claims to 4, wherein when the operation body is pressed by a single finger, a reaction force regarding at least one tactile sensation among soft texture, hard texture and elastic feeling of the object to be touched is applied from the operation body to the finger.

11. The tactile sensation reproduction apparatus according to any one of claims 1 to 10, wherein a line of action of a reaction force that indicates a relationship between the moved distance of the operation body and the reaction force is the same for a case when the operation body is pressed, and when the operation body is returning back.

12. The tactile sensation reproduction apparatus according to any one of claims 1 to 10, wherein a line of action of a reaction force that indicates a relationship between the moved distance of the operation body and the reaction force is different for a case when the operation body is pressed, and when the operation body is returning back.

13. The tactile sensation reproduction apparatus according to any one of claims 1 to 12, wherein the reaction force is applied from the operation body to the finger by changing electric power supplied to the motor step by step at a predetermined cycle.

14. The tactile sensation reproduction apparatus according to claim 10, wherein a line of action of a reaction force that indicates a relationship between the moved distance of the operation body and the reaction force corresponds to a reaction force generated in operation when the object to be touched is a mechanism operation component.
